(19) Europäisches Patentamt
European Patent Office
Office européen des brevets

(11) EP 0 351 626 B1

(12) EUROPÄISCHE PATENTSCHRIFT

(45) Veröffentlichungstag und Bekanntmachung des Hinweises auf die Patenterteilung:
**24.01.1996 Patentblatt 1996/04**

(51) Int Cl.[6]: **C08K 5/37**, C08K 5/521, C08K 5/53, C08L 69/00

(21) Anmeldenummer: **89112149.3**

(22) Anmeldetag: **04.07.1989**

(54) **Stabilisierte Formmassen**

Stabilized moulding compositions

Compositions de moulage stabilisées

(84) Benannte Vertragsstaaten:
**DE FR GB IT**

(30) Priorität: **16.07.1988 DE 3824285**

(43) Veröffentlichungstag der Anmeldung:
**24.01.1990 Patentblatt 1990/04**

(73) Patentinhaber: **BAYER AG**
**D-51368 Leverkusen (DE)**

(72) Erfinder:
- **Eichenauer, Herbert, Dr.**
  **D-4047 Dormagen 1 (DE)**
- **Leitz, Edgar, Dr.**
  **D-4047 Dormagen (DE)**
- **Ott, Karl-Heinz, Dr.**
  **D-5090 Leverkusen 1 (DE)**
- **Pask, Stephen, Dr.**
  **D-4047 Dormagen (DE)**

(56) Entgegenhaltungen:
**EP-A- 0 023 291** **EP-A- 0 234 915**
**FR-A- 2 285 428** **GB-A- 1 138 944**

- **PATENT ABSTRACTS OF JAPAN, Band 4, Nr. 101 (C-19)(583), 19 July 1980**
- **CHEMICAL ABSTRACTS, Band 90, 5. -19. März 1989, S.34, rechte Spalte Zusammenfassung Nr. 72884x, Columbus, Ohio, USA.**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft aliphatische Polycarbonate, Blockcopolymere aus Blöcken polymerisierter cyclischer aliphatischer Carbonate und Blöcken polymerisierter Vinylverbindungen und sequenziert aufgebaute Copolymere aus cyclischen aliphatischen Carbonaten und Estern, die mit Mercaptobenzimidazol oder Derivaten des Mercaptobenzimidazols stabilisiert sind.

Die genannten Polymerisate, die aliphatische Carbonatstruktureinheiten enthalten, besitzen je nach Struktur, Aufbau und chemischer Zusammensetzung Eigenschaften von elastischen Thermoplasten bis thermoplastischen Elastomeren.

Für die praktische Anwendung müssen sie eine Reihe von Anforderungen erfüllen, z.B. bei höheren Verarbeitungstemperaturen stabil sein, damit z.B. eine Verarbeitung durch Spritzguß, Extrusion oder Kalandrierung möglich ist. Bisher waren jedoch speziell für diese Polymertypen keine thermisch stabilisierenden Zusätze bekannt, die nach Zumischung eine längere Temperaturbelastung des Polymermaterials erlauben.

Es wurde nun gefunden, daß durch Zugabe von 0,01 bis 5,0 Gew.-%, vorzugsweise 0,05 bis 3,0 Gew.-% und besonders bevorzugt 0,2 bis 2,0 Gew.-%, bezogen auf Homopolymer, Blockcopolmer oder sequenziert aufgebautes Copolymer mit aliphatischen Carbonatstruktureinheiten, Mercaptobenzimidazol oder Derivaten des Mercaptobenzimidazols eine sehr hohe Stabilität bei längerer Temperaturbelastung erreicht wird.

Gegenstand der vorliegenden Erfindung sind Formmassen aus Homopolymeren, Blockcopolymeren oder sequenziert aufgebauten Copolymeren mit aliphatischen Carbonatstruktureinheiten oder Mischungen daraus enthaltend 0,01 bis 5,0 Gew.-%, vorzugsweise 0,05 bis 3,0 Gew.-% und besonder bevorzugt 0,2 bis 2,0 Gew.-% (bezogen auf Polymer) Mercaptobenzimidazol oder Derivate des Mercaptobenzimidazols sowie gegebenenfalls zusätzlich Verbindungen des dreiwertigen Phosphors und/oder übliche Antioxidantien.

Erfindungsgemäß einzusetzende Polymere sind beispielsweise Homopolycarbonate der Struktur (I)

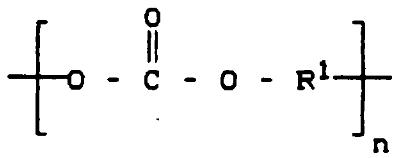 (I)

mit $n \geq 20$
worin

$R^1$ = $-(CH_2)_m-$ mit n = 3-12,
$-CH_2CH_2CH(CH_3)-$
$-CH_2CH_2OCH_2CH_2OCH_2CH_2-$
$-CH_2CH(CH_3)CH_2CH_2C(CH_3)_2CH_2-$

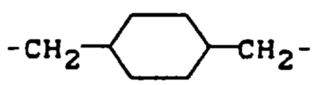 , 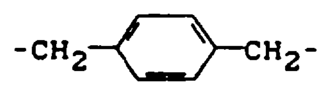 ,

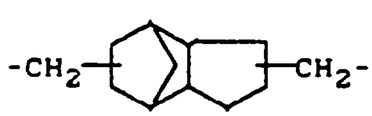 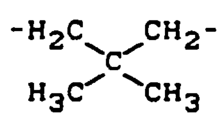

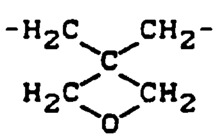 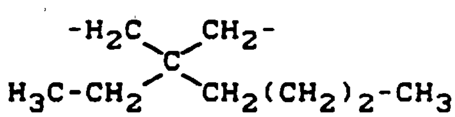

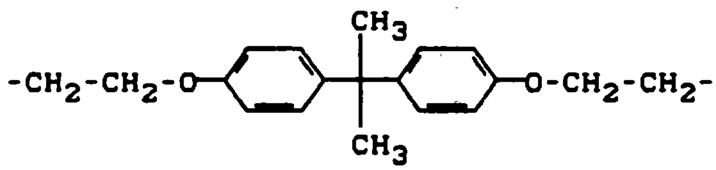

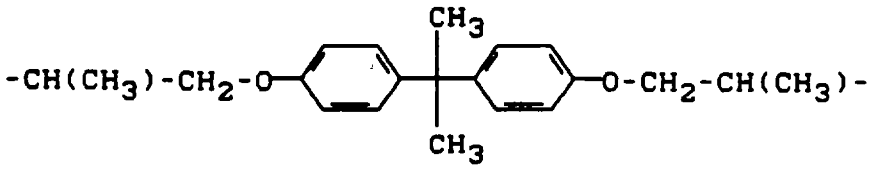

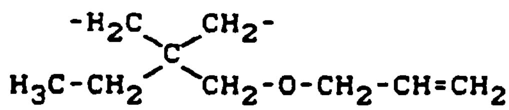

bedeutet.

Die aliphatischen Polycarbonate können nach üblichen Methoden, z.B. durch Phosgenierung von Diolen (DE-OS 20 01 091, FR-PS 13 91 512, DE-OS 10 31 512, DE-OS 24 46 107, DE-OS 26 05 024, EP 002 641, DE-OS 24 47 349) besser aber durch ringöffnende Masse - und Lösungspolymerisation von cyclischen, aliphatischen Carbonaten hergestellt werden (DE-OS 15 45 116, 15 45 117, 31 03 135, 32 04 078).

Das bevorzugte Herstellungsverfahren ist die anionische ringöffnende Lösungspolymerisation von cyclischen aliphatischen Carbonaten bei tiefen Temperaturen (DE-OS 36 07 625).

Cyclische aliphatische Carbonate als Ausgangsprodukte für die Herstellung der erfindungsgemäßen Polycarbonate sind Verbindungen der Formel (II)

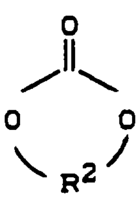

(II)

worin

$R^2$ = $-(CH_2)_n-$ mit n = 3-12,
$-CH_2CH_2CH(CH_3)-$
$-CH_2CH_2OCH_2CH_2OCH_2CH_2-$
$-CH_2CH(CH_3)CH_2CH_2C(CH_3)_2CH_2-$

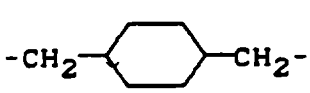 , 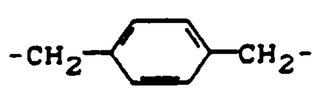 ,

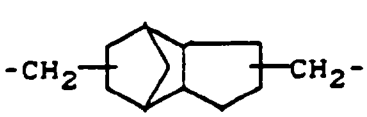

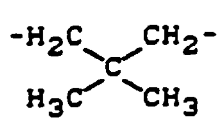

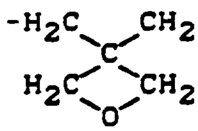

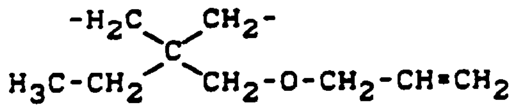

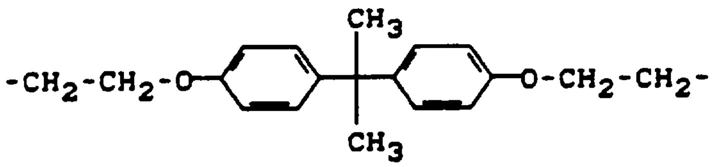

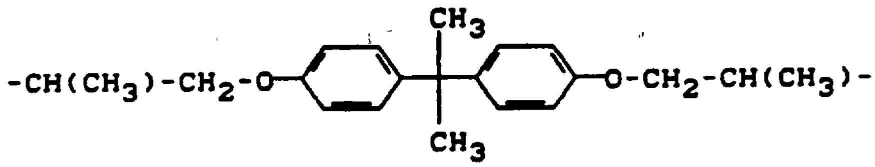

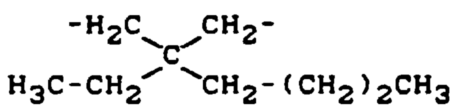

bedeutet und Verbindungen der Formel (III)

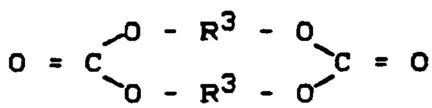 (III)

worin

$R^3$ = $-(CH_2)_n-$ mit n = 4-12
$-CH_2CH_2OCH_2CH_2-$
$-CH_2CH_2OCH_2CH_2OCH_2CH_2-$

bedeutet.

Bevorzugt werden Carbonate der Formel (II) verwendet. Besonders bevorzugt ist das Carbonat mit $R^2$ =

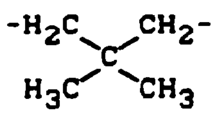

Die Molekulargewichte der aliphatischen Polycarbonate können 2000 g/mol bis 500 000 g/mol, bevorzugt 5000 g/mol bis 120 000 g/mol betragen.

Weitere erfindungsgemäß einzusetzende Polymere sind Blockcopolymere der idealisierten Formel (IV)

$$A\text{-}B\text{-}A;\ B\text{-}A\text{-}B \text{ oder } (A\text{-}B)_x \qquad (IV)$$

mit x = 1 bis 20, insbesondere x = 1 bis 10,
worin

A = Rest eines Homopolymerisats von Styrol, Vinylnaphthalin, Isopropenylnaphthalin oder Butadien-1,3, oder Isopren, insbesondere von Styrol oder Butadien-1,3, und

B = Rest eines Homopolymeren eines cyclischen, aliphatischen Carbonats der allgemeinen Formel (II)

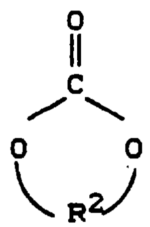 (II)

oder der allgemeinen Formel (III)

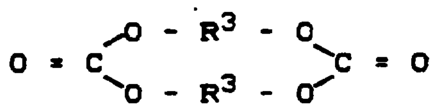 (III)

worin
$R^2$ und $R^3$ die oben angegebene Bedeutung haben.

Besonders werden Carbonate der Formel (II) verwendet, besonders bevorzugt ist das Carbonat der Formel

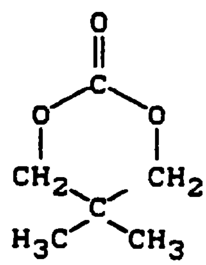

Die mittleren Molekulargewichte der Blöcke A und B sind größer 800, vorzugsweise größer 1000 und besonders bevorzugt größer 10 000.

In den Blockcopolymeren können die mittleren Molekulargewichte der Blöcke A und B verschieden oder nahezu gleich groß sein.

Die Blockcopolymeren enthalten den Block A in Mengen von 5 bis 95 Gew.-% und den Block B in Mengen von 95 bis 5 Gew.-%, vorzugsweise aber in Mengen von 5 bis 20 Gew.-% A und 95 bis 80 Gew.-% B sowie 5 bis 20 Gew.-% B und 95 bis 80 Gew.-% A; d.h. in den bevorzugten Blockcopolymeren überwiegt gewichtsmäßig entweder die Komponente A oder B.

Die Blockcopolymeren können durch anionische Polymerisation gemäß DE-OS 3 607 627 hergestellt werden.

Weitere erfindungsgemäß einzusetzende Polymerkomponenten sind Polymere mit sequenzartigem Aufbau der idealisierten Formel (V)

$$-(-A-T-B)_n- \qquad (V)$$

mit n = 1 bis 20, insbesondere 1 bis 10, worin

-A- = Polymerisat eines cyclischen Carbonats der Formel II ("Block A")

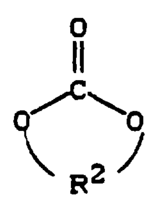 (II)

oder der Formel (III)

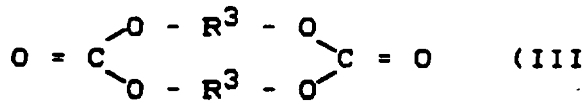 (III)

worin
$R^2$ und $R^3$ die oben angegebenen Reste bedeuten,

-B- = Polymerisat eines cyclischen Esters mit der Formel VI ("Block B")

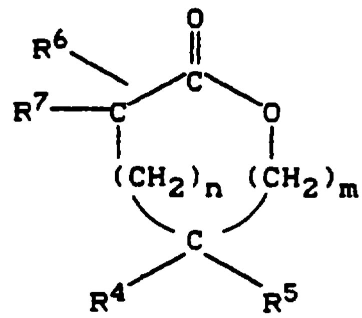 (VI)

mit

$R^4$, $R^5$, $R^6$, $R^7$ = H, $C_1$-$C_6$-Alkyl, $C_3$-$C_6$-Alkenyl, $C_1$-$C_6$-Alkoxy, $C_1$-$C_6$-Alkenoxy-$C_1$-$C_6$-alkyl, insbesondere H, $CH_3$, $C_2H_5$

m, n unabhängig voneinander 0, 1, 2, 3, 4, 5, oder 6
und worin

T Mittelstück, enthaltend sowohl das cyclische Carbonat der Formel II und/oder III als auch den cyclischen Ester der Formel VI in polymerisierter Form, wobei die Konzentration der Reste II und/oder III in Richtung auf -B- und die Konzentration der Reste VI in Richtung auf -A- kontinuierlich abnimmt ("tapered structure") bedeutet.

Besonders bevorzugte cyclische Carbonate (II) und (III) sind Trimethylenglykolcarbonat, Neopentylglykolcarbonat, 1,4-Butandiolcarbonat sowie dimere Carbonate des Pentandiols oder des Hexandiols.

Bevorzugte Lactone (VI) sind ε-Caprolacton und Pivalolacton.

In den Polymeren können die mittleren Molekulargewichte der Blöcke A und B sowie der Mittelstücke T verschieden oder nahezu gleich groß sein.

Die Polymerisate enthalten die Blöcke A bzw. B in Mengen von 5 bis 95 Gew.-% (bezogen auf Gesamtmenge A + B), vorzugsweise aber in Mengen von 5 bis 20 Gew.-% A und 95 bis 80 Gew.-% B (bezogen auf A + B), sowie 5 bis 20 Gew.-% B und 95 bis 80 Gew.-% A (bezogen auf A + B); der Gehalt an Mittelstücken T mit einer "tapered-structure" beträgt 5 bis 95 Gew.-% (bezogen auf A + B + T), vorzugsweise 20 bis 80 Gew.-% (bezogen auf A + B + T).

Die Copolymeren lassen sich aus den cyclischen Carbonaten und Estern durch anionische ringöffnende Lösungspolymerisation herstellen. Ein sequentieller Aufbau der Copolymeren wird durch eine stufenweise Zugabe der Carbonat/Ester-Mischung zur polymerisationsaktiven Lösung erreicht.

Als Mittel zur Erhöhung der Stabilität bei längerer Temperaturbelastung werden 2-Mercaptobenzimidazol oder Derivate des 2-Mercaptobenzimidazols, z.B. der Formel (VII)

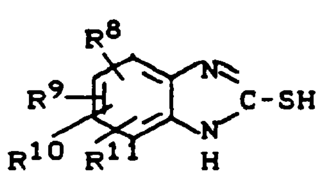 (VII)

mit $R^8$ bis $R^{11}$ unabhängig voneinander H, $C_1$-$C_4$-Alkyl, oder Benzyl eingesetzt.

Bevorzugte Derivate sind 4-Methyl-2-mercaptobenzimidazol, 5-Methyl-2-mercaptobenzimidazol, deren Gemische

sowie die entsprechenden Zinksalze und/oder Magnesiumsalze.

2-Mercaptobenzimidazol und seine Derivate können auch mit Verbindungen des dreiwertigen Phosphors und/oder üblichen Antioxidantien kombiniert werden.

Geeignete Verbindungen des dreiwertigen Phosphors sind z.B. Phosphite der allgemeinen Formel (VIII),

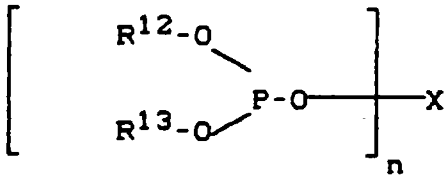

(VIII)

in der bedeuten

| | |
|---|---|
| X | Wasserstoff, einen gegebenenfalls substituierten aliphatischen, cycloaliphatischen oder aromatischen Rest mit 1 bis 18 C-Atomen oder einen Alkaryl oder Aralkylrest mit 7 bis 24 C-Atomen, die auch olefinische Doppelbindungen und Heteroatome (bevorzugt O, S und nichtbasische Stickstoffe) enthalten können, |
| n | eine ganze Zahl von 1 bis 4, vorzugsweise 1 bis 2, entsprechend der Bindigkeit von X, |
| $R^{12}$ und $R^{13}$ | unabhängig voneinander $C_1$-$C_{18}$-Alkyl, $C_5$ bis $C_{15}$-Cycloalkyl, $C_7$ bis $C_{24}$-Aralkyl bzw. Alkaryl oder $C_6$ bis $C_{24}$-Aryl, |
| $R^{12}$ und X | gemeinsam eine gegebenenfalls substituierte $C_2$ bis $C_4$ Alkylenkette |
| $R^{12}$, $R^{13}$ und X | zusammen einen geradkettigen oder verzweigten $C_1$ bis $C_9$-Alkyl oder $C_5$ bis $C_7$-Cycloalkylrest, der mit 3-6-gliedrigen cyclischen Resten, die als Heteroatome O und S enthalten, substituiert sein kann. |

Solche Phosphite sind in EP-A 023 291 beschrieben.

Bevorzugt sind Stabilisatoren der Formel (VIII) mit X = Aromat, vorzugsweise substituiert mit $C_1$-$C_9$-Alkylrest und $R^{12}$ und $R^{13}$ = Aromat, vorzugsweise substituiert mit $C_1$-$C_9$-Alkylresten in o- und/oder p-Stellung zur Esterbindung.

Besonders bevorzugt sind Verbindungen der Formel (VIII) mit n = 1 und $R^{12}$ = $R^{13}$ = X = Aromat, substituiert mit $C_9$-Alkyl.

Geeignet sind ferner Phosphite der allgemeinen Formel (IX)

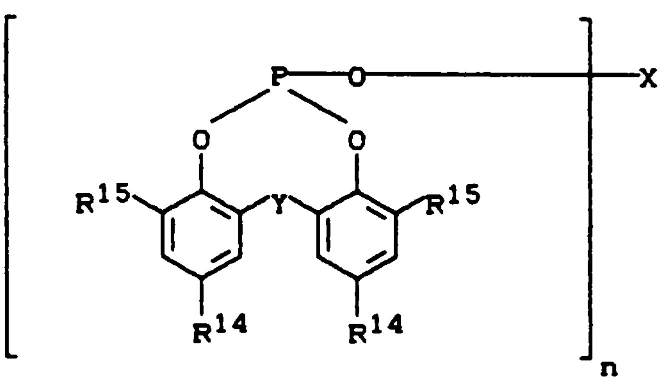

(IX)

in der

| | |
|---|---|
| X und n | die oben angegebene Bedeutung haben, |
| $R^{14}$ und $R^{15}$ | gleiche oder verschiedene $C_{1-9}$ aliphatische $C_{5-6}$ cycloaliphatische und $C_{7-9}$-Aralkyl oder $C_{6-10}$-Arylreste bedeuten, |

Y für S oder $HCR^{16}$ steht, wobei $R^{16}$ = H, $C_{1-6}$-Alkyl-, Cyclohexenyl- oder Cyclohexyl.

Diese Phosphite sind in EP 232 901 beschrieben.
Besonders bevorzugt sind Verbindungen der Formel (IX), in denen

X Wasserstoff,

$R^{14}$ einen $C_{1-9}$-Alkylrest, einen $C_{5-6}$-Cycloalkylrest, einen $C_{7-9}$-Aralkylrest oder einen $C_{6-10}$ Arylrest bedeutet,

$R^{15}$ einen Benzyl-, α-Methylbenzyl-, α,α'-Dimethylbenzyl-, Methyl-, Ethyl-, Isopropyl-, tert.-Butyl-, tert.-Amyl-, Isononyl-, Cyclopentyl- oder Cyclohexylrest darstellt und

Y für S, $CH_2$, $CH_3$-CH, $-CH_3CH_2CH$, $CH_3CH_2CH_2$-CH, $(CH_3)_2$CH-CH,

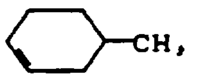 , 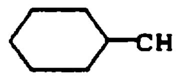

steht.

Erfindungsgemäß einzusetzende Stabilisatoren sind ferner Phosphonite der Formeln X-Xe gemäß DE-OS 2 034 887:

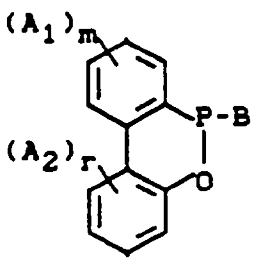 (X)

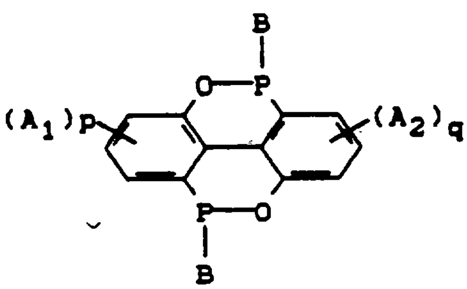 (Xa)

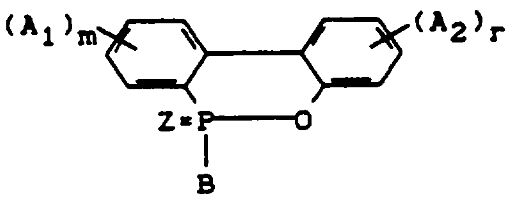 (Xb)

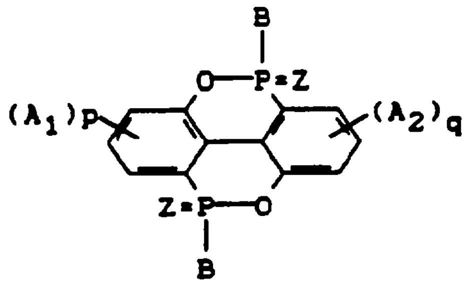

(Xc)

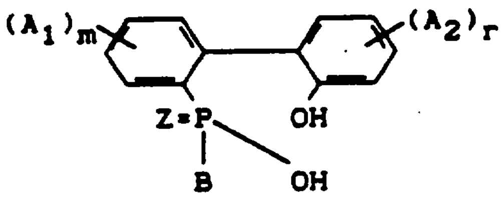

(Xd)

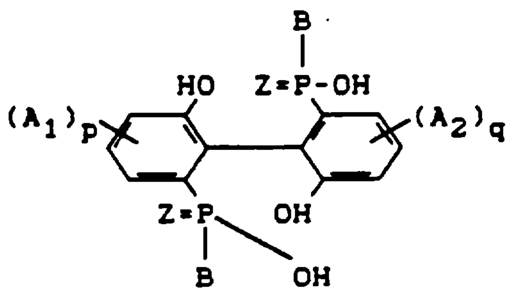

(Xe)

worin B Wasserstoff, Hydroxyl, Halogen, $C_1$-$C_{22}$-Alkyl, $C_1$-$C_{22}$-Alkoxy, $C_1$-$C_{22}$-Alkylthio, Aryloxy oder eine Arylthio, $A_1$ und $A_2$, die gleich oder verschieden sein können, Wasserstoff, Halogen, $C_1$-$C_{18}$-Alkyl, $C_1$-$C_{18}$-Alkyloxy, Aryl, Aryloxy, Acyl, Cyan, wobei die Reste $A_1$ und $A_2$ zusammen mit dem Biphenylring auch einen Phenanthrenring bilden können, Z Sauerstoff oder Schwefel, m und r ganze Zahlen von 0 bis 4 und p und q ganze Zahlen von 0 bis 3 bedeuten.

Die systematischen Bezeichnungen dieser Organophosphorverbindungen sind sehr kompliziert. Sie besitzen beispielsweise folgende Strukturformeln:

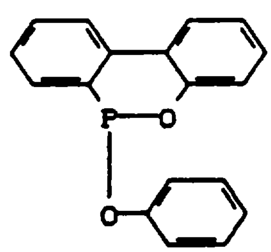

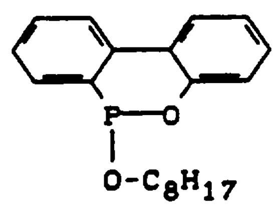

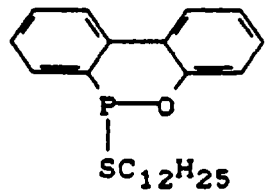

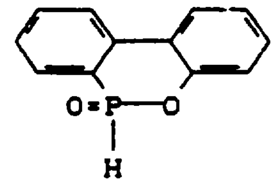

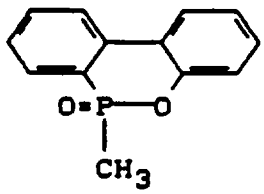

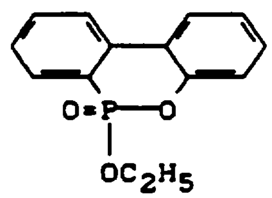

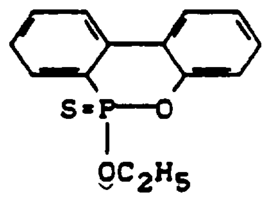

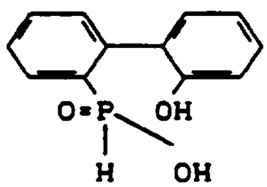

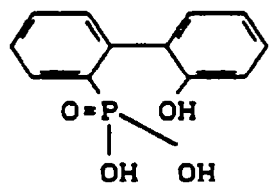

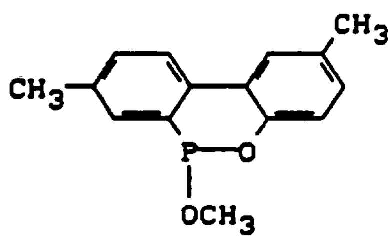

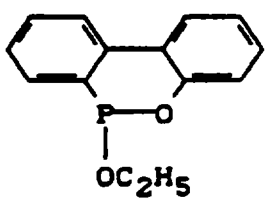

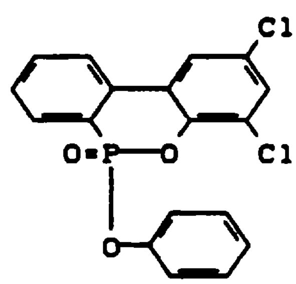

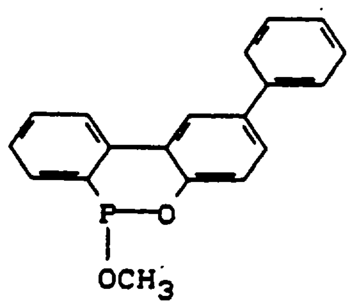

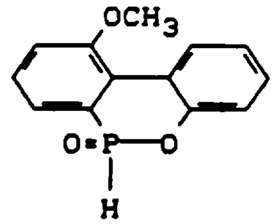

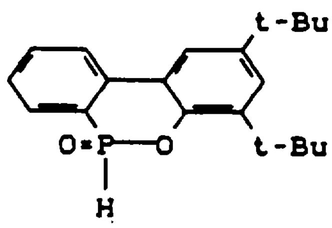

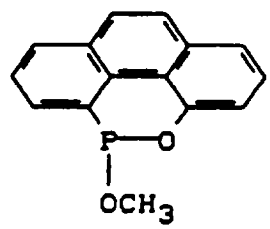

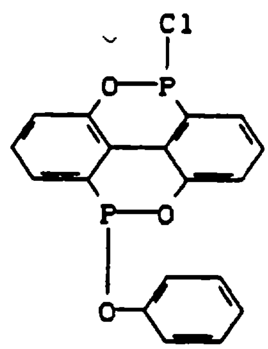

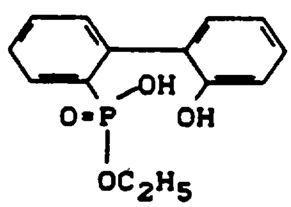

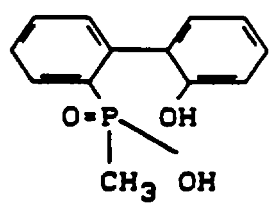

bevorzugt sind Verbindungen der Formeln X-Xe, in denen

| | |
|---|---|
| B | H, OH, $C_1$-$C_{18}$-Alkyl, $C_1$-$C_{18}$-Alkoxy, Aryloxy, Arylthio |
| $A_1$ und $A_2$ | H, $C_1$-$C_9$-Alkyl $C_1$-$C_4$-Alkoxy, Aryl, Aryloxy |
| Z | O |
| m und r | 0, 1 oder 2 |
| p und q | 0, 1 oder 2<br>besonders bevorzugt |
| B | H, OH, $C_1$-$C_4$-Alkyl $C_1$-$C_4$-Alkoxy, Aryloxy |

| | |
|---|---|
| $A_1$ und $A_2$ | H, $C_1$-$C_4$-Alkyl |
| Z | O |
| m und r | 0 oder 1 |
| p und q | 0 oder 1. |

Erfindungsgemäß einzusetzende Stabilisatoren sind ferner Phosphite der Formel (XI), die aus Pentaerythrit, Perhydrobisphenol A, Monoalkoholen und Phosphorigsäureester zugänglich sind. Sie werden hergestellt, indem man die Komponenten Trialkyl- oder Triphenylphosphit, Pentaerythrit, Perhydrobisphenol und gegebenenfalls einen Monoalkohol in den erforderlichen Molverhältnissen miteinander umestert und dabei den Alkohol aus dem Trialkylphosphit oder Phenol aus dem Triphenylphosphit durch Destillation gegebenenfalls im Vakuum bis zu einer Sumpftemperatur von maximal 200° aus dem Gleichgewicht entfernt.

Zweckmäßig setzt man zuerst Pentaerythrit mit dem Phosphit um unter Abdestillieren einer ersten Fraktion von etwa 2 Mol Hydroxyverbindung pro Mol Phosphit, dann gibt man Perhydrobisphenol A hinzu und destilliert während der Umsetzung weitere Hydroxyverbindung ab bis zu einer Sumpftemperatur von vorzugsweise 180°C, besonders bevorzugt 170°C.

Soll ein $C_6$-$C_{18}$-Monoalkohol mit verwendet werden, so wird dieser vorzugsweise zugegeben, nachdem die zweite Fraktion der Hydroxyverbindung abdestilliert wurde. Nach Zugabe dieses Monoalkohols wird eine dritte Fraktion der Hydroxyverbindung aus dem ursprünglich eingesetzten Phosphit destillativ bis zu einer Sumpftemperatur von vorzugsweise 180°C, besonders bevorzugt 170°C, gegebenenfalls Vakuum entfernt.

Arbeiten im Vakuum ist besonders dann erforderlich, wenn mit Triphenylphosphit gearbeitet wird, oder wenn im Endstadium der Umesterung die letzten Reste eines niedrigen Alkohols aus dem Reaktionsgemisch entfernt werden sollen.

Die genannten Komponenten werden in folgenden Molverhältnissen miteinander umgesetzt:

| Komponenten | im allgemeinen | besser | bevorzugt | besonders bevorzugt |
|---|---|---|---|---|
| Perhydrobis-phenol A | 1 | 1 | 1 | 1 |
| Pentaerythrit | 0,5-2,0 | 0,66-1,5 | 0,75-1,3 | 0,80-1,2 |
| Phoshpit | 1,3-4,0 | 1,5-3,5 | 1,6 -3,2 | 1,7 -2,8 |
| Monoalkohol | 0-1,5 | 0-1,0 | 0-0,5 | 0-0,3 |

Geeignete Phosphite sind Triphenylphosphit bevorzugt Trialkylphosphite aus $C_1$-$C_4$-Alkoholen besonders bevorzugt Trimethyl- und Triethylphosphit.

Geeignete Monoalkohole sind aliphatische Alkohole mit 6-18 C-Atomen, besonders primäre Alkohole. Genannt

seien beispielsweise Isooctanol, Decanol, Dodecanol, Tetradecanol und Octadecanol.

Naturgemäß entstehen bei dieser Synthese durch Umesterung keine einheitlichen Verbindungen, sondern Gemische von oligomeren Phosphiten, denen überwiegend die folgende Struktur XI zukommt:

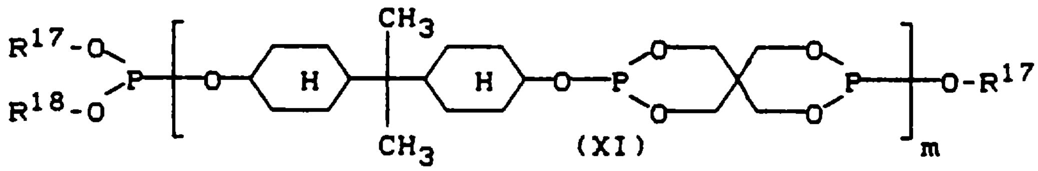

(XI)

worin $R^{17}$, $R^{18}$ und $R^{19}$ gleich oder verschieden sein können und $C_1$-$C_{18}$-Alkyl, Aryl, einen Rest der Struktur XII,

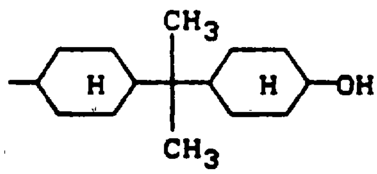

(XII)

$R^{17}$ außerdem einen Rest Struktur XIII,

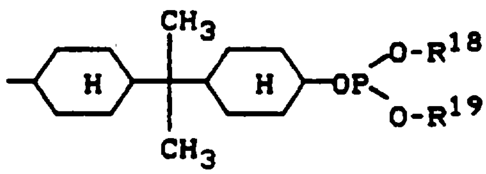

(XIII)

$R^{18}$ und $R^{19}$ außerdem zusammen

einen Rest der Struktur XIV darstellen und m

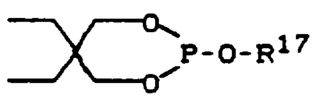

(XIV)

eine ganze Zahl von 1-20 bedeuten.

Bevorzugt stellen dar $R^{17}$, $R^{18}$ und $R^{19}$ Methyl, Ethyl, Propyl, Butyl, Isooctyl, Decyl, Dodecyl, Tetradecyl, Octadecyl, $R^{17}$ außerdem den Rest (XII) und (XIII) und $R^{18}$ und $R^{19}$ zusammen den Rest (XIV), m = 2-15. Besonders bevorzugt sind $R^{17}$, $R^{18}$ und $R^{19}$ Methyl, Ethyl, Octadecyl (Stearyl), $R^{17}$ außerdem Rest XII und XIII, $R^{18}$ und $R^{19}$ zusammen außerdem Rest (XIV), m = 2-10.

Ähnliche Stabilisatoren wie unter XI beschrieben sind in der US-PS 3 571 251 offenbart.

Auch diese Phosphite können im Sinne der vorliegenden Erfindung verwendet werden, wobei X bevorzugt Sauerstoff ist.

Die Einsatzmengen der Verbindungen des dreiwertigen Phosphors betragen 0,01 bis 5 Gew.-%, bevorzugt 0,05 bis 2,0 Gew.-% und besonders bevorzugt 0,2 bis 1,8 Gew.-%, jeweils bezogen auf Homopolymer, Blockcopolymer oder sequenziert aufgebautes Copolymer mit aliphatischen Carbonatstruktureinheiten.

Weiterhin ist es möglich, bekannte Antioxidantien, wie sterisch gehinderte Phenole, in Mengen von 0,05 bis 3,0 Gew.-%, bezogen auf Polymer, zuzusetzen. Geeignete Antioxidantien sind beispielsweise in Ullmanns Encyclopädie der technischen Chemie, Band 8, S. 19, Verlag Chemie, Weinheim/Bergstraße, beschrieben.

Die erfindungsgemäß zur Erhöhung der Stabilität bei längerer Temperaturbelastung eingesetzten 2-Mercaptobenzimidazol(derivate) können (gegebenenfalls in Kombination mit geeigneten Verbindungen des dreiwertigen Phosphors und bekannten Antioxidantien) den Homopolymeren bzw. Block- oder sequenziert aufgebauten Copolymeren mit aliphatischen Carbonatstruktureinheiten in bekannter Weise, z.B. in Kneter, auf Walzenstühlen oder in Schneckenmaschinen zugegeben werden.

Die Verarbeitung der Polymerisate richtet sich nach ihren Eigenschaften, z.B: können Polymerisate mit thermoplastischen Eigenschaften wie Thermoplaste verformt werden.

Die erfindungsgemäßen Formmassen eignen sich vorzugsweise zur Herstellung von Folien, Dichtungen, Beschichtungen insbesondere dort, wo verbessertes Verhalten bei längerer Temperaturbelastung benötigt wird sowie zur Herstellung vo Verpackungsmaterialien.

Die erfindungsgemäßen Formmassen lassen sich nach bekannter Weise stabilisieren, pigmentieren und mittels üblicher Additive antistatisch, besser verarbeitbar oder flammfest ausrüsten oder mit Füllstoffen füllen.

Beispiele

Das thermische Abbauverhalten von aliphatischen Polycarbonaten und von Copolymerisaten aus aliphatischen Carbonaten und Estern wurde wie folgt bestimmt:

In einem Reagenzglas wurde 1 g des Polymerisats bzw. Copolymerisats unter den in den Tabellen angegebenen Bedingungen (Temperatur, Zeit) erhitzt. Die relative Viskosität ($\eta_{rel}$) des Polymerisats bzw. Copolymerisats wurde an einer 2 Gew.-%igen Lösung in Methylenchlorid bei 20°C ermittelt und der Viskosität einer unbehandelten Probe gegenübergestellt. Aus dem Vergleich mit der Viskosität der nicht erhitzten Probe ergibt sich der jeweilige Grad der thermischen Schädigung.

Verwendete Stabilisatoren:

Stabilisator I:

Zinksalz des 4- bzw. 5-Methylmercaptobenzimidazols (Isomerengemisch)

Stabilisator II:

Phosphorigsäureester des Bis(2-hydroxy-3-cyclohexyl-5-methylphenyl)-methans

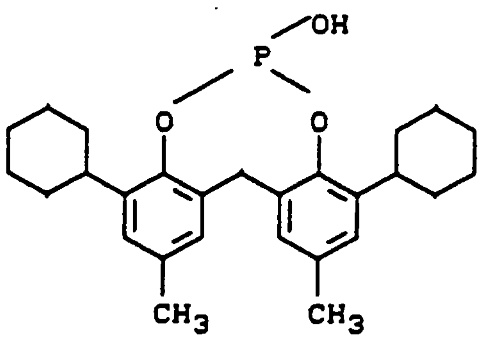

II

Polymerisat I:

Polyneopentylglykolcarbonat

Zu einer Lösung von 2000 g Neopentylglykolcarbonat in 10 l Toluol wurden bei 20°C 6 ml n-Butyllithium (2,5 molare Lösung in Hexan) unter Rühren und unter Stickstoff gegeben. Die Polymerisationszeit betrug bei dieser Temperatur 90 min. Das Reaktonsgemisch wurde dann durch Zugabe von 100 ml Methanol/1 molare Phosphorsäure (1:1) zerlegt. Das Polymere wurde in Methanol gefällt, durch Filtration isoliert und getrocknet.
Ausbeute: 1930 g (96,5 %)
$\eta_{rel}$= 5,65

Beispiel 1

Polymerisat I wurde zusammen mit 0,5 Gew.-% des Stabilisators I in Methylenchlorid gelöst, wonach das Lösungsmittel an Rotationsverdampfer entfernt wurde.

Beispiel 2

Polymerisat I wurde mit 0,25 Gew.-% des Stabilisators I und 0,25 Gew.-% des Stabilisators II versetzt.

Vergleichsbeispiel 1

Polymerisat I unstabilisiert.

**Tabelle 1**

| | | Beispiel 1 | Beispiel 2 | Vergleichsbeispiel 1 |
|---|---|---|---|---|
| | | | $\eta_{rel}$ | |
| Ausgangsviskosität | | | 5,65 | |
| Versuchsbedingungen | | | | |
| Temperatur | Zeit | | | |
| 130° C | 24h | 5,60 | 5,65 | 5,65 |
| 140° C | 24h | 5,50 | 5,65 | 5,45 |
| 150° C | 24h | 5,20 | 5,55 | 5,20 |
| 160° C | 24h | 5,00 | 5,35 | 3,30 |
| 180° C | 24h | 4,25 | 4,05 | 3,65 |

**Tabelle 2**

| Temperatur | Zeit | Beispiel 1 | Beispiel 2 | Vergleichsbeispiel 1 |
|---|---|---|---|---|
| | | | $\eta_{rel}$ | |
| Ausgangsviskosität | | | 5,65 | |
| Versuchsbedingungen | | | | |
| 160° C | 24h | 5,00 | 5,40 | 3,35 |
| 160° C | 48h | 4,35 | 4,70 | 2,70 |
| 160° C | 72h | 4,45 | 4,55 | 2,40 |
| 160° C | 96h | 4,05 | 4,05 | 2,05 |
| 160° C | 168h | 3,45 | 3,55 | 1,70 |

Polymerisat II:

Copolymerisat aus Neopentylglykolcarbonat und ε-Caprolacton

Zu einer Lösung von 540 g Neopentylglykolcarbonat und 1260 g ε-Caprolacton in 10 l Toluol wurden bei 15°C 10 ml n-Butyllithium (2,5 molare Lösung in Hexan) unter Rühren und unter Stickstoff gegeben. Die Polymeriationszeit betrug bei dieser Temperatur 70 min. Das Reaktionsgemisch wurde dann durch Zugabe von 100 ml Methanol/1 molare Phosphorsäure (1:1) zerlegt. Das Copolymerisat wurde in Methanol gefällt, durch Filtration isoliert und getrocknet.
Ausbeute: 1663 g (92,4 %)
$\eta_{rel}$ : 7,6

Beispiel 3

Das Polymerisat II wurde mit 0,5 Gew.-% des Stabilisators I versetzt.

Beispiel 4

Polymerisat II wurde mit 0,25 Gew.-% des Stabilisators I und 0,25 Gew.-% des Stabilisators II versetzt.

Verlgeichsbeispiel 2:

Polymerisat II nicht stabilisiert.

**Tabelle 3**

| | | Beispiel 3 | Beispiel 4 | Vergleichsbeispiel 2 |
|---|---|---|---|---|
| | | | $\eta_{rel}$ | |
| Ausgangsviskosität | | | 7,60 | |
| Versuchsbedingungen | | | | |
| Temperatur | Zeit | | | |
| 120° C | 24h | 7,65 | 7,60 | 7,70 |
| 130° C | 24h | 6,80 | 7,40 | 6,20 |
| 140° C | 24h | 5,95 | 6,80 | 3,80 |
| 150° C | 24h | 4,85 | 5,40 | 3,55 |
| 160° C | 24h | 3,65 | 4,35 | 2,20 |

**Tabelle 4**

| | Beispiel 3 | Beispiel 4 | Vergleichsbeispiel 2 |
|---|---|---|---|
| | | $\eta_{rel}$ | |
| Ausgangsviskosität | | 7,60 | |
| Versuchsbedingungen | | | |
| Temperatur Zeit | | | |
| 130°C 24h | 7,00 | 7,55 | 6,30 |
| 130°C 48h | 6,50 | 7,40 | 4,80 |
| 130°C 72h | 6,00 | 6,40 | 3,30 |
| 130°C 96h | 5,50 | 5,90 | 2,40 |

## Patentansprüche

1. Formmassen aus Homopolymeren, Blockcopolymeren oder sequenziert aufgebauten Copolymeren mit aliphatischen Carbonatstruktureinheiten oder Mischungen daraus enthaltend 0,01 bis 5,0 Gew.-% (bezogen auf Polymer)

Mercaptobenzimidazol oder Derivate des Morcaptobenzimidazols.

2. Formmassen gemäß Anspruch 1 enthaltend das Zinksalz eines Isomerengemisches aus 4-Methyl-2-mercaptobenzimidazol und 5-Methyl-2-mercaptobenzimidazol als Mercaptobenzimidazolderivat.

3. Formmassen gemäß Anspruch 1 enthaltend zusätzlich 0,01 bis 5 Gew.-% einer oder mehrerer Verbindungen des dreiwertigen Phosphors.

4. Formmassen gemäß Anspruch 1 enthaltend zusätzlich übliche Antioxidantien.

5. Formmassen gemäß Anspruch 3 enthaltend zusätzlich übliche Antioxidantien.

**Claims**

1. Moulding compositions of homopolymers, block copolymers or sequential copolymers containing aliphatic carbonate structural units or mixtures thereof, containing from 0.01 to 5.0% by weight (based on polymer) of mercaptobenzimidazole or derivatives of mercaptobenzimidazole.

2. Moulding compositions as claimed in claim 1, containing the zinc salt of an isomer mixture of 4-methyl-2-mercaptobenzimidazole and 5-methyl-2-mercaptobenzimidazole as mercaptobenzimidazole derivative.

3. Moulding compositions as claimed in claim 1, additionally containing 0.01 to 5% by weight of one or more compounds of trivalent phosphorus.

4. Moulding compositions as claimed in claim 1, additionally containing standard antioxidants.

5. Moulding compositions as claimed in claim 3, additionally containing standard antioxidants.

**Revendications**

1. Matières à mouler en homopolymères, en copolymères en blocs ou en copolymères à structure séquencée, à motifs de structure de carbonates aliphatiques ou leurs mélanges, contenant 0,01 à 5,0 % en poids (par rapport au polymère) de mercaptobenzimidazole ou de dérivés du mercaptobenzimidazole.

2. Matières à mouler selon revendication 1, contenant le sel de zinc d'un mélange d'isomères consistant en le 4-méthyl-2-mercaptobenzimidazole et le 5-méthyl-2-mercaptobenzimidazole, en tant que dérivé du mercaptobenzimidazole.

3. Matières à mouler selon revendication 1, contenant en outre 0,01 à 5 % en poids d'un ou plusieurs composés du phosphore trivalent.

4. Matières à mouler selon revendication 1, contenant en outre des antioxydants usuels.

5. Matières à mouler selon revendication 3, contenant en outre des antioxydants usuels.